# EUROPEAN PATENT APPLICATION

(11) **EP 1 983 793 A1**
(43) Date of publication of application: **22.10.2008**
(21) Application number: 07713882.4
(22) Date of filing: 06.02.2007
(51) Int. Cl.: H04Q 7/38, H04L 12/56

(54) **MASTER STATION, BASE STATION, MOBILE STATION, AND TRANSMISSION CONTROL METHOD**

(30) Priority: 07.02.2006 JP 2006030318
(71) Applicant: NTT DoCoMo, Inc., Chiyoda-ku Tokyo 100-6150 (JP)
(72) Inventor: HARADA, Atsushi, Chiyoda-ku, Tokyo 1006150 (JP); UMESH, Anil, Chiyoda-ku, Tokyo 1006150 (JP); ISHII, Minami, Chiyoda-ku, Tokyo 1006150 (JP); KATO, Yasuhiro, Chiyoda-ku, Tokyo 1006150 (JP)
(74) Representative: HOFFMANN EITLE
(86) International application number: PCT/JP2007/052053
(87) International publication number: WO 2007/091571

(57) **Abstract**

An upper node station includes a packet flow multiplexing portion that multiplexes packet flows that are identified by QoS, in accordance with a QoS requirement; and a transmission portion that transmits the multiplexed packet flows.

## Description

### TECHNICAL FIELD

The present invention relates to an upper node station, a base station, a mobile station, and a transmission control method.

### BACKGROUND ART

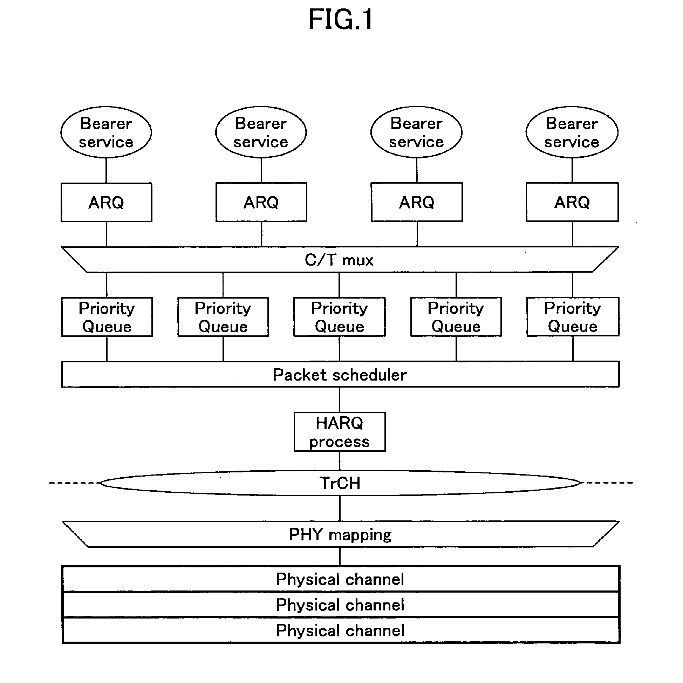

In HSDPA (high-speed downlink packet access), for example, a bearer service is defined for every service (QoS) as shown in FIG. 1.

In addition, one bearer service is associated with one ARQ (Automatic Repeat reQuest) entity.

Moreover, data flows having the same requirements (priority) of QoS can be multiplexed to one priority Queue by a function of C/T multiplexing (C/T mux) provided by a MAC layer.

### SUMMARY OF INVENTION

### PROBLEM TO BE SOLVED BY THE INVENTION

However, the background art has the following problem.

When plural services are provided, the ARQ entities are increased accordingly even when the services have the same QoS. Therefore, there is a problem in that signaling upon addition of the entity is more frequently carried out.

The present invention has been made in order to solve the above problem, and is directed to an upper node station, a base station, a mobile station, and a transmission control method that enable efficient multiplexing when plural services are provided.

### MEANS FOR SOLVING THE PROBLEM

In order to solve the above problem, an upper node station according to an example of the present invention includes a packet flow multiplexing portion that multiplexes packet flows that are identified by QoS, in accordance with a QoS requirement; and a transmission portion that transmits the multiplexed packet flows.

With this, a corresponding relationship between the flows after multiplexing and ARQ entities can be set up when an initial flow is set up.

In addition, a base station according to an example of the present invention includes a packet flow multiplexing portion that multiplexes packet flows that are identified by QoS, in accordance with a QoS requirement; and a retransmission portion that carries out retransmission control for every one of the multiplexed packet flows.

With this, a corresponding relationship between the flows after multiplexing and ARQ entities can be set up when an initial flow is set up.

Moreover, a mobile station according to an example of the present invention includes a packet flow separation portion that separates packet flows that are identified by QoS and multiplexed in accordance with a QoS requirement.

When configured as above, the plural packet flows having the same QoS requirements can be separated.

Additionally, a mobile station according to an example of the present invention includes a packet flow multiplexing portion that multiplexes packet flows that are identified by QoS, in accordance with a QoS requirement; and a retransmission control portion that carries out retransmission control for every one of the multiplexed packet flows.

With this, a corresponding relationship between the flows after multiplexing and ARQ entities can be set up when an initial flow is set up.

Furthermore, a transmissions control method according to an example of the present invention includes steps of multiplexing packet flows identified by QoS, in accordance with a QoS requirement; and carrying out retransmission control for every one of the multiplexed packet flows.

With this, a corresponding relationship between the flows after multiplexing and ARQ entities can be set up when an initial flow is set up.

### ADVANTAGE OF THE INVENTION

According to an example of the present invention, an upper node station, a base station, a mobile station, and a transmission control method are realized that enable efficient multiplexing when plural services are provided.

### BRIEF DESCRIPTION OF THE DRAWINGS

FIG. 1 is an explanatory view of a related art multiplexing method.
FIG. 2 is a partial block diagram of a mobile station according to an embodiment of the present invention.
FIG. 3 is a partial block diagram of an upper node station and a base station according to an embodiment of the present invention.
FIG. 4 is a flowchart illustrating operations of a radio communications system according to an embodiment of the present invention.
FIG. 5 is a partial block diagram of an upper node station and a base station according to an embodiment of the present invention.
FIG. 6 is a flowchart illustrating operations of a radio communications system according to an embodiment of the present invention.

### LIST OF REFERENCE SYMBOLS

100 mobile station
200 base station
300 upper node station

### BEST MODE FOR CARRYING OUT THE INVENTION

Referring to the accompanying drawings, a best mode for carrying out the present invention will be described in the following.

In all the drawings for describing an example, the same reference marks are given to components having the same functions, and repetitive explanation is omitted.

A radio communications system according to an example of the present invention includes a mobile station, a base station, and an upper node station.

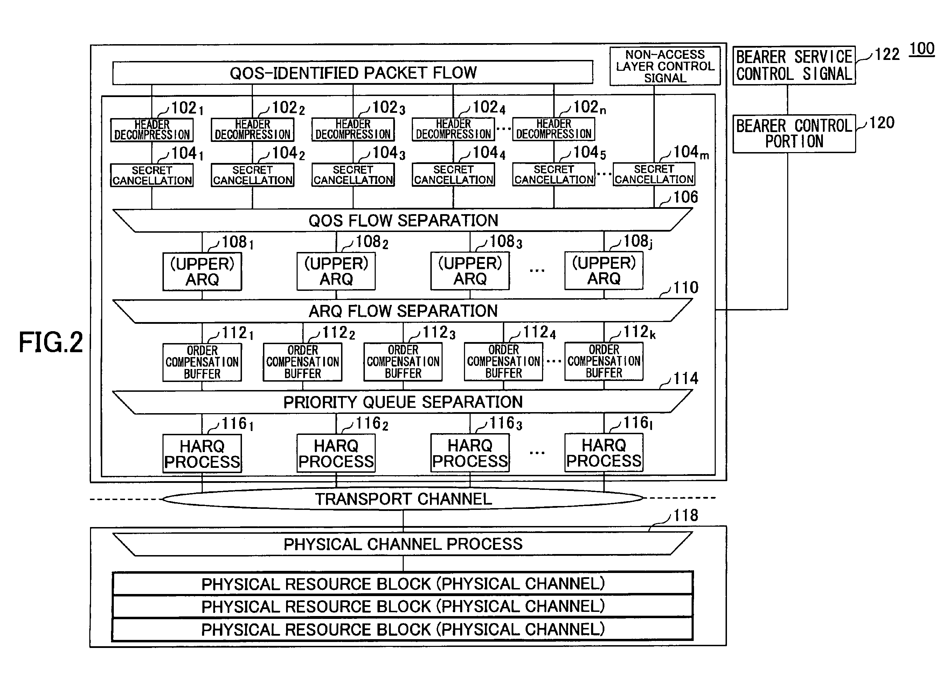

Referring to FIG. 2, the mobile station according to this example is explained.

The mobile station 100 according to this example includes a physical channel process portion 118 to which a reception signal is input from every physical resource block (physical channel), HARQ (Hybrid ARQ) process portions 116 (116₁, ···, 116₁) connected to the physical channel process portion 118, a priority queue separation portion 114 to which output signals of the HARQ process portions 116 are input, order compensation buffers 112 (112₁, ···, 112ₖ) to which an output signal of the priority queue separation portion 114 is input, an ARQ (Automatic Repeat reQuest) flow separation portion 110 to which output signals of the order compensation buffers 112 are input, (upper) ARQs 108 (108₁, ···, 108ⱼ) to which an output signal of the ARQ flow separation portion 110 is input, a QoS flow separation portion 106 serving as a packet flow separator to which output signals of the (upper) ARQs 108 are input, decryption portions 104 (104₁, ···, 104ₘ) to which an output signal of the QoS flow separation portion 106 is input, and header decompression portions 102 (102₁, ···, 102ₙ) to which output signals of the decryption portions 104 are input. Here, n, m, j, k and l are integers more than or equal to zero.

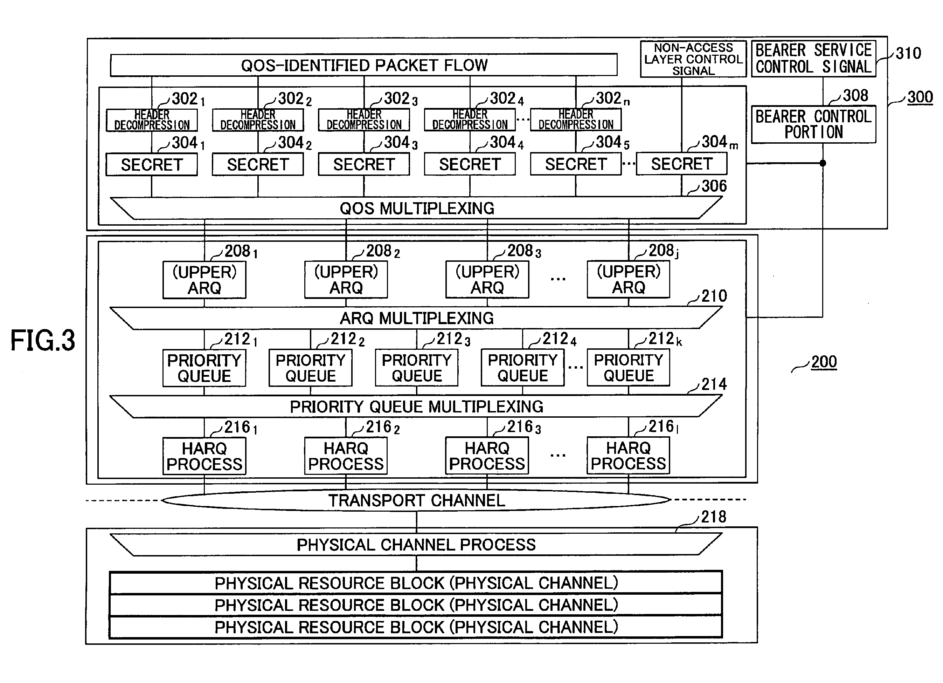

Transmission data from a base station 200 (FIG. 3) are received by the mobile station 100 and input to the physical channel process portion 118.

The physical channel process portion 118 carries out demapping the transmission data of the physical channel. The physical channel process portion 118 separates the demapped data from a transport channel and outputs the data to the HARQ process portions 116. The HARQ process portions 116 carry out HARQ processes for the input transmission data and output the transmission data to the priority queue separation portion 114. The priority queue separation portion 114 separates queues in accordance with priorities and outputs the queues to the corresponding order compensation buffers 112.

The order compensation buffers 112 output the transmission data for which the HARQ process has been carried out to the ARQ flow separation portion 110.

The ARQ flow separation portion 110 separates packet flows for which the HARQ process has been carried out, carries out assignment per ARQ and outputs the assigned packet flows to the upper ARQs 108.

The upper ARQs 108 carry out ARQ processes for plural separated packet flows having the same QoS (Quality of Service: service quality) requirement, and output the plural packet flows to the QoS flow separation portion 106.

The QoS flow separation portion 106 separates the plural packet flows having the same QoS requirement, and outputs the separated packet flows to the decryption portions 104.

The decryption portions 104 carry out a decryption process for the separated packet flows and output the processed packet flows to the header decompression portions 102. In addition, the decryption portion 104ₘ outputs non-access layer control signals.

The header decompression portions 102 carry out header decompression processes for the packet flows for which the decryption processes have been carried out, and output the QoS-identified packet flows.

Next, the base station (eNode B) 200 and an upper node station (aGW) 300 according to an example of the present invention are explained in reference to FIG. 3.

The base station 200 according to this example includes upper ARQs 208 (208₁, ···, 208ⱼ), an ARQ multiplexing portion 210 to which output signals of the upper ARQs 208 are input, priority queues 212 (212₁, ···, 212ₖ) to which an output signal of the ARQ multiplexing portion 210 is input, a priority queue multiplexing portion 214 to which output signals of the priority queues 212 are input, HARQ process portions 216 (216₁, ···, 216ₗ) to which an output signal of the priority queue multiplexing portion 214 is input, and a physical process portion 218 to which output signals of the HARQ process portions 216 are input. Here, j, k and l are integers more than or equal to zero.

Packet flows to which identifiers corresponding to flows after multiplexing, e.g., identifiers corresponding to upper ARQ entities are given on a frame protocol (FP), are transmitted from the upper node station 300 and received by the upper ARQs 208 of the base station 200. The frame protocol (FP) is one of protocols that configure a data frame in order to transfer packets between the base station (eNode B) 200 and the upper node station (aGW) 300.

The upper ARQs 208 carry out the ARQ processes for multiplexing processed plural packets having the same QoS requirement, and output the ARQ processed packet flows to the ARQ flow multiplexing portion 210.

The ARQ flow multiplexing portion 210 allocates the ARQ processed packet flows to priority queues 212 in accordance with priorities.

The priority queues 212 output the ARQ-processed packet flows for which the allocations have been carried out by the ARQ flow multiplexing portion 210 to the priority queue multiplexing portion 214.

The priority queue multiplexing portion 214 allocates the ARQ-processed packet flows to the HARQ process portions 216 in accordance with determination by the mobile station.

The HARQ process portions 216 multiplex the allocated ARQ-process packet flows on the transport channel, and output the transport channel to the physical channel process portion 218.

The physical channel portion 218 carries out physical channel mapping. As a result, the data are transmitted through a physical resource block (frequency block).

Next, the upper node station 300 according to this example of the present invention is explained. The upper node station 300 carries out multiplexing the plural packet flows. In addition, the upper node station 300 sets up a corresponding relationship between the flows after multiplexing and the ARQ entities when an initial flow is set up.

The upper node station 300 includes header compression portions 302 (302₁, ···, 302ₙ), encryption process portions 304 (304₁, ···, 304ₘ₋₁) to which output signals of the header compression portions 304 are input, another encryption process portion 304 (304ₘ) to which the non-access layer control signal is input, a QoS multiplexing portion 306 serving as a packet flow multiplexer to which output signals of the encryption process portions 304 are input, and a bearer control portion 308 to which a bearer service control signal 310 is input. Here, n and m are integers more than or equal to zero.

The QoS-identified packet flows are input to the different header compression portions 302, for example, in accordance with the identified QoSs. The header compression portions 302 carry out header compression processes for the corresponding input packet flows, and output the processed packet flows to the corresponding encryption process portions 304.

The encryption process portions 304 carry out encryption processes for the corresponding header-compressed packet flows, and output the processed packet flows to the QoS multiplexing portion 306.

On the other hand, the non-access layer control signal is input to the encryption process portion 304ₘ. The encryption process portion 304ₘ carries out the encryption process for the non-access layer control signal, and outputs the processed signal to the QoS multiplexing portion 306.

The QoS multiplexing portion 306 multiplexes the plural packet flows having the same QoS requirement, i.e., a retransmission parameter, a delay requirement, or the like, on the packet flows for which the encryption processes have been carried out, and carries out allocation processes to upper retransmission control entities. For example, the QoS multiplexing portion 306 gives bearer service IDs to packet headers transmitted over the FP. The QoS multiplexing portion 306 transmits each of multiplexed packet flows to a corresponding one of the upper ARQs 208 upon every allocation to the upper retransmission control entities. In this case, the QoS multiplexing portion 306 may include an identifier for identifying the flows in an upper ARQ SDU.

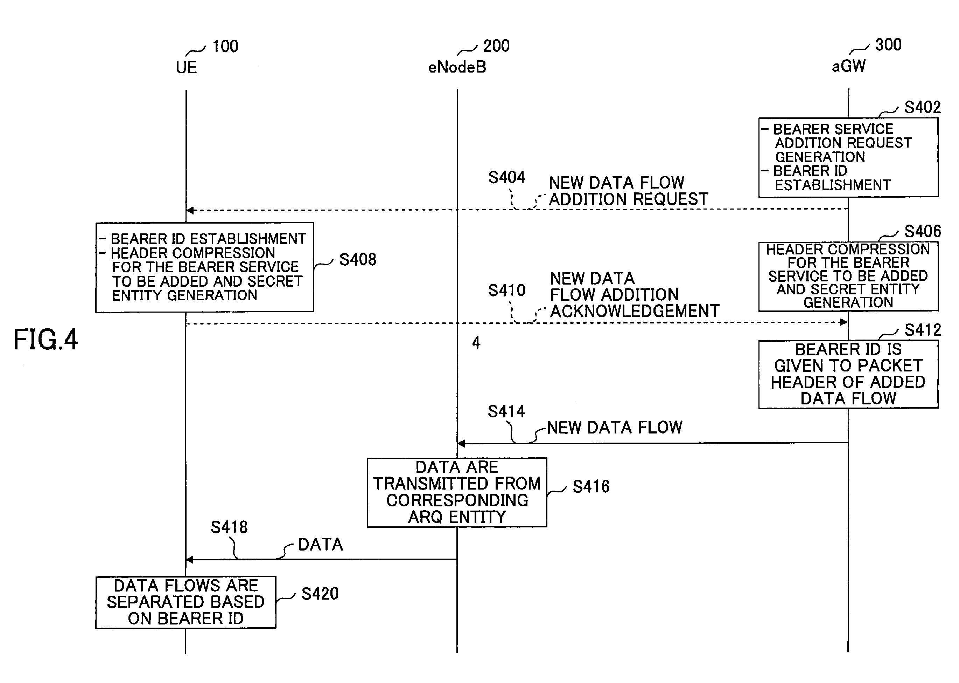

Next, a transmission control process according to an example of the present invention is explained in reference to FIG. 4.

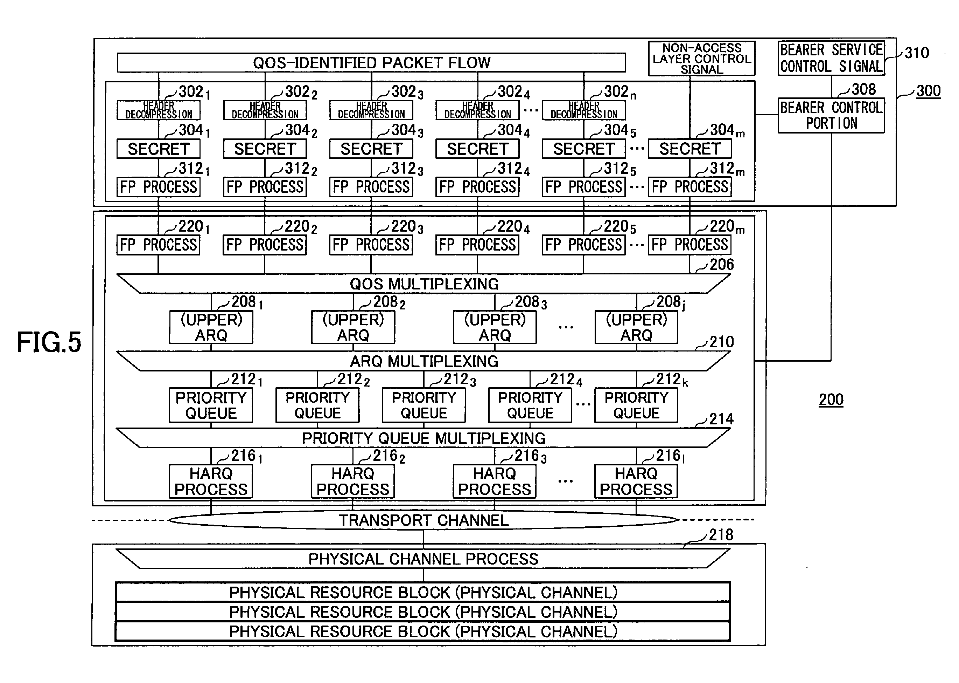

A request for a bearer addition is generated in the upper node station 300. Specifically, a bearer service control signal 310 (FIG. 5) is input to the bearer control portion 308. In the bearer control portion 308 of the upper node station 300, a bearer ID is set up (step S402). In addition, the bearer control portion 308 transmits a request for adding a new data flow to the mobile station 100 via the base station 200 (step S404). In the upper node station 300, the header compression processes for the bearer service to be added and generations of the corresponding encryption entities are carried out in the header compression portions 302 and the encryption process portions 304, respectively (step S406).

In a bearer control portion 120 of the mobile station 100, the bearer ID is set up in response to the request for adding the new data flow from the upper node station 300. In addition, the bearer control portion 120 carries out a header compression process for the bearer service to be added and generates the encryption entity (step S408). The bearer control portion 120 acknowledges the request for adding the new data flow (step S410).

Next, in the QoS multiplexing portion 306 of the upper node station 300, the bearer ID is given to the packet header of the added data flow (step S412). The upper node station 300 starts transmitting the new data flow to the base station 200 (step S414).

The base station 200 transmits the data from the corresponding ARQ entities (steps S416, S418). The relationship of the multiplexed flows to the ARQ entities has been set up between the upper node station 300 and the base station 200.

In the QoS flow separation portion 106 of the mobile station 100, the data flows are separated in accordance with the bearer IDs (step S420).

Next, a radio communications system according to another example of the present invention is explained. The radio communications system according to this example is different from the radio communications system of the foregoing example in terms of configurations of the upper node station and the base station.

The base station (eNodeB) and the upper node station (aGW: Access Gateway) are explained in reference to FIG. 5.

The base station 200 according to this example carries out multiplexing plural packet flows. In addition, the base station 200 sets up a relationship between the flows after multiplexing and the ARQ entities when an initial flow is set up.

The base station 200 includes FP process portions 220 (220₁, ···, 220ₘ), a QoS multiplexing portion 206 serving as a packet flow multiplexer to which output signals of the FP process portions 220 are input, (upper) ARQs 208 (208₁, ···, 208ⱼ) to which an output signal of the QoS multiplexing portion 206 is input, an ARQ multiplexing portion 210 to which output signals of the (upper) ARQs 208 are input, priority queues 212 (212₁, ···, 212ₖ) to which an output signal of the ARQ multiplexing portion 210 is input, a priority queue multiplexing portion 214 to which output signals of the priority queues 212 are input, HARQ process portions 216 (216₁, ···, 216ₗ) to which an output signal of the priority queue multiplexing portion 214 is input, and a physical channel process portion 218 to which output signals of the HARQ process portions 216 are input. Here, m, j, k, and l are integers more than or equal to zero.

Packet flows having the bearer service IDs given to the packet headers are transmitted from the upper node station 300, received by the base station 200, and input to the FP process portions 220.

The FP process portions 220 carry out processes regarding the frame protocol, and output the processed packet flows to the QoS multiplexing portion 206.

The QoS multiplexing portion 206 multiplexes the input packet flows to the corresponding ARQ entities in accordance with the bearer service IDs given to the headers of the corresponding packets. In other words, the QoS multiplexing portion 206 multiplexes the plural packet flows having the same QoS requirement, i.e., a retransmission parameter, a delay requirement, or the like, and allocates the packet flows to the retransmission control entities one-layer above. For example, the QoS multiplexing portion 206 carries out multiplexing to the upper retransmission control entities in accordance with the bearer service IDs at a multiplexing point in the base station 200. The QoS multiplexing portion 206 transmits each of multiplexed packet flows to a corresponding one of the upper ARQs 208 upon every allocation to the upper retransmission control entities. In this case, the QoS multiplexing portion 306 may allow an identifier for identifying the flows to be included in an upper ARQ SDU.

The upper ARQs 208 carry out the ARQ processes for the multiplexed plural packet flows having the same QoS requirement, and output the process packet flows to the ARQ flow multiplexing portion 210.

The ARQ multiplexing portion 210 allocates the ARQ-processed packet flows to the priority queues 212 in accordance with priorities.

The priority queues 212 output the packet flows for which the allocations have been carried out by the ARQ multiplexing portion 210 to the priority queue multiplexing portion 214.

The priority queue multiplexing portion 214 allocates the ARQ-processed packet flows to the HARQ process portions 216 in accordance with the HARQ.

The HARQ process portions 216 multiplex the allocated ARQ-processed packet flows on the transport channel, and output the multiplexed packet flows to the physical process portion 218.

The physical channel process portion 218 carries out physical channel mapping.

As a result, data are transmitted through the physical resource block (frequency block).

Next, the upper node station 300 according to this example is explained. The upper node station 300 gives the bearer service ID to the packet header.

The upper node station 300 according to this example includes header compression portions 302 (302₁, ···, 302ₙ) to which the QoS-identified packet flows are input, encryption process portions 304 (304₁, ···, 304ₘ) to which output signals of the header compression portions 302 or the non-access layer control signal are input, and FP process portions 312 (312₁, ···, 312ₘ) connected to the encryption process portions 304. Here, n and m are integers more than or equal to zero.

The QoS-identified packet flows are input to the corresponding header compression portions 302, for example, in accordance with the identified QoSs.

The encryption process portions 304 carry out the encryption processes for the header-compressed packet flows and output the processed packet flows to the FP process portions 312.

The FP process portions 312 give the bearer service IDs to the packet headers of the encryption processed packet flows. For example, the FP process portions 312 give the bearer service IDs to the packet headers. As a result, the packet flows having the bearer service IDs given to the packet headers are transmitted to the base station 200.

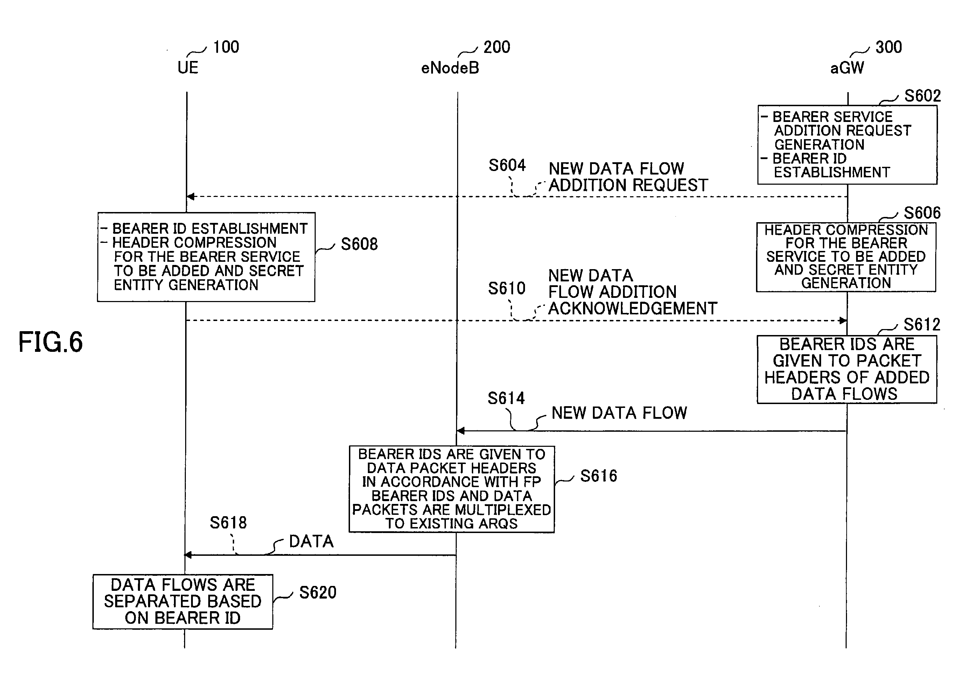

Next, a transmission control process in the radio communications system according to this example is explained in reference to FIG. 6.

A request for a bearer addition is generated in the upper node station 300. Specifically, a bearer service control signal 310 is input to the bearer control portion 308. In the bearer control portion 308 of the upper node station 300, the bearer ID is set up (step S602). In addition, the bearer control portion 308 transmits a request for adding a new data flow to the mobile station 100 via the base station 200 (step S604). In the upper node station 300, the header compression processes for the bearer service to be added and corresponding generations of the encryption entity are carried out in the header compression portions 302 and the encryption process portions 304, respectively (step S606).

In the bearer control portion 120 of the mobile station 100, a bearer ID is set up in response to the request for adding the new data flow from the upper node station 300. In addition, the bearer control portion 120 carries out a header compression process for the bearer service to be added and generation of the encryption entity (step S608). The bearer control portion 120 acknowledges the request for adding the new data flow (step S610).

Next, in the QoS multiplexing portion 306 of the upper node station 300, the bearer IDs are given to the packet headers of the added data flows (step S612). The upper node station 300 starts transmitting the new data flows to the base station 200 (step S614).

The QoS multiplexing portion 206 of the base station 200 gives the bearer IDs to the headers of the data packets in accordance with the FP bearer IDs (step S616). The relationship between the flows to be multiplexed and the corresponding ARQ entities has been known by the base station 200. The base station 200 transmits the data packets multiplexed to the ARQ entities (step S618).

In the QoS flow separation portion 106 of the mobile station 100, the data flows are separated in accordance with the bearer IDs (step S620).

In the above examples, while functions of the upper node station and the base station are explained separately, the functions may be realized by, for example, the upper node station or the base station.

In addition, while a downlink is explained in the above examples, the examples may be applied to an uplink. In this case, the mobile station can have the functions of the upper node station and the base station explained in reference to FIG. 3.

According to the examples of the present invention, efficient multiplexing is realized even when plural services are provided.

In addition, when the plural services are provided, the number of the ARQ entities can be reduced.

Moreover, when a service is added, a bearer service configuration can be simplified.

This international patent application is based on Japanese Priority Application No. 2006-030318, filed on February 7, 2006, with the Japanese Patent Office, the entire contents of which are hereby incorporated by reference.

### INDUSTRIAL APPLICABILITY

An upper node station, a base station, a mobile station, and a transmission control method according to the present invention can be applied to a radio communications system.

## Claims

1. An upper node station comprising:
a packet flow multiplexing portion that multiplexes packet flows that are identified by QoS, in accordance with a QoS requirement; and
a transmission portion that transmits the multiplexed packet flows.

2. The upper node station of claim 1, further comprising a retransmission control portion that carries out retransmission control for every one of the multiplexed packet flows.

3. The upper node station of claim 1, wherein the packet flow multiplexing portion multiplexes the packet flows in accordance with at least one of a retransmission parameter and a delay requirement.

4. A base station comprising:
a packet flow multiplexing portion that multiplexes packet flows that are identified by QoS, in accordance with a QoS requirement; and
a retransmission portion that carries out retransmission control for every one of the multiplexed packet flows.

5. The base station of claim 4, wherein the packet flow multiplexing portion multiplexes the packet flows in accordance with at least one of a retransmission parameter and a delay requirement.

6. A mobile station comprising;
a packet flow separation portion that separates packet flows that are identified by QoS and multiplexed in accordance with a QoS requirement.

7. The mobile station of claim 6, wherein the packet flow separation portion separates the packet flows in accordance with at least one of a retransmission parameter and a delay requirement.

8. A mobile station comprising:
a packet flow multiplexing portion that multiplexes packet flows that are identified by QoS, in accordance with a QoS requirement; and
a retransmission control portion that carries out retransmission control for every one of the multiplexed packet flows.

9. The mobile station of claim 8, wherein the packet flow multiplexing portion multiplexes the packet flows in accordance with at least one of a retransmission parameter and a delay requirement.

10. A transmissions control method comprising steps of:
multiplexing packet flows identified by QoS, in accordance with QoA requirement; and
carrying out retransmission control for every one of the multiplexed packet flows.
